# EUROPÄISCHE PATENTSCHRIFT

(11) **EP 3 023 272 B1**
(45) Veröffentlichungstag und Bekanntmachung des Hinweises auf die Patenterteilung: **02.01.2019**
(21) Anmeldenummer: 15195829.5
(22) Anmeldetag: 23.11.2015
(51) Int. Cl.: B60C 27/08, B60C 27/02

(54) **KETTENGLIED MIT STACHEL SOWIE DREIGLIEDSTÜCK UND REIFENKETTE MIT SELBIGEM**
CHAIN LINK WITH SPIKE AND THREE PART PIECE AND WHEEL CHAIN WITH THE SAME
ARTICULATION DE CHAÎNE DOTÉE D'ERGOTS ET PIÈCE À TROIS ÉLÉMENTS ET CHAÎNE DE PNEU EN ÉTANT DOTÉE

(30) Priorität: 21.11.2014 DE 202014105627 U
(43) Veröffentlichungstag der Anmeldung: 25.05.2016
(73) Patentinhaber: RUD Ketten Rieger & Dietz GmbH u. Co. KG, 73432 Aalen (DE)
(72) Erfinder: Rieger, Johannes Werner, 73437 Oberkochen (DE); Rösler, Bernd, 73433 Aalen-Wasseralfingen (DE); Brenner, Kai, 73432 Aalen-Waldhausen (DE)
(74) Vertreter: Grünecker Patent- und Rechtsanwälte PartG mbB

(56) Entgegenhaltungen:
- EP-A1- 2 199 117
- DE-A1-102011 102 879
- FR-A- 901 364
- GB-A- 512 837
- US-A- 2 093 547
- US-A- 2 184 127
- US-A- 5 423 365

## Beschreibung

Die Erfindung betrifft ein Kettenglied für Reifen- und/oder Gleitschutzketten, mit wenigstens einem vorspringenden Stachel, wobei der Stachel an wenigstens einem Endabschnitt eine an wenigstens einer Stelle eingebuchtete Außenkontur aufweist. Die Erfindung betrifft außerdem ein Dreigliedstück für Reifen- und/oder Gleitschutzketten mit drei Kettengliedern und eine Reifenkette, insbesondere eine Reifen- und/oder Gleitschutzkette für Forstfahrzeuge. Kettenglieder mit wenigstens einem vorspringenden Stachel sind bekannt. Diese werden insbesondere für Reifenketten verwendet, welche einen Reifen schützen und/oder die Traktion verbessern sollen. Insbesondere finden Kettenglieder mit wenigstens einem vorspringenden Stachel Verwendung in Reifenketten für Forstfahrzeuge. Kettenglieder der vorbenannten Art sind beispielsweise aus der gattungsbildenden DE 10 2011 102 879 A1 und der EP 2 199 117 A1 bekannt. Die in diesen Druckschriften dargestellten Kettenglieder sind mit Stacheln versehen, um die Traktion der Kettenglieder zu verbessern. Die Stacheln sind dabei entweder mit polygonalen Querschnitten oder mit geriffelten Oberflächen versehen. Ein anderer Ansatz ist in der GB 512 837 A beschrieben, bei dem Kettenglieder mit flachen, plattenförmigen Strukturen anstelle von Stacheln zur Traktionsverbesserung versehen werden. Die bekannten Stachel sind dabei in der Regel an ein Kettenglied geschweißt oder monolithisch mit diesem geformt. Bekannte Stachel sind zwar praktikabel und können einen Reifen schützen sowie die Traktion verbessern, jedoch kommt es bei der Verwendung von Kettengliedern mit Stacheln gelegentlich zu Beschädigungen des Stachels bzw. dessen Abriss von dem übrigen Kettenglied. Ein weiterer Nachteil ist der, dass es auch bei Reifen, die mit einer Reifenkette mit Kettengliedern, die einen Stachel aufweisen, versehen sind, trotz verbesserter Traktion zu einem Durchdrehen kommen kann. Aus den Druckschriften US 2093 547 A, US 5 423 365 A und US 2 184 107 20 Art sind Kettenglieder mit Traktionselementen bekannt, die im Wesentlichen plattenförmig sind.

Es ist daher die Aufgabe der Erfindung, ein Kettenglied der oben genannten Art bereit zu stellen, dessen Stabilität gegenüber bekannten Kettengliedern derselben Art erhöht ist und durch das die Traktion einer mit einem solchen Kettenglied ausgestatteten Reifenkette weiter verbessert werden kann.

Für das eingangs genannte Kettenglied ist die erfindungsgemäße Aufgabe dadurch gelöst, dass eine minimale Breite der Außenkontur höchstens drei Viertel einer maximalen Länge der Außenkontur beträgt.

Die erfindungsgemäße Lösung kann dazu beitragen, dass die Stabilität des Stachels erhöht ist. Zudem kann die Stelle mit der eingebuchteten Außenkontur die Traktion eines Reifens, der mit einer Reifenkette ausgestaltet ist, welche erfindungsgemäße Kettengliederaufweist, verbessern. Die Außenkontur des Stachels bezieht sich dabei auf eine Kontur des Querschnitts des Stachels quer zu einer Stachellängsrichtung. Der Stachel kann außerhalb der Stelle eine runde oder ovale Form aufweisen. Im Bereich der Stelle kann ein Querschnitt des Stachels gegenüber benachbarten Bereichen verkleinert sein. Die wenigstens eine Stelle mit der eingebuchteten Außenkontur kann einen Traktionsbereich für das Kettenglied darstellen. Die erfindungsgemäße Ausgestaltung des Stachels erlaubt es, eine besonders gute Traktion zu erhalten.

Das erfindungsgemäße Dreigliedstück löst die erfindungsgemäße Aufgabe dadurch, dass mindestens zwei der drei Kettenglieder durch erfindungsgemäße Kettenglieder gebildet sind. Dreigliedstücke können als Untereinheiten zum Aufbau einer Reifenkette verwendet werden. Durch Verwendung mindestens zwei erfindungsgemäßer Kettenglieder kann ein besonders stabiles und traktionsverbesserndes Dreigliedstück erhalten werden.

Die erfindungsgemäße Aufgabe wird für eine Reifenkette der oben genannten Art dadurch gelöst, dass die Reifenkette mindestens zwei erfindungsgemäße Kettenglieder und/oder mindestens ein erfindungsgemäßes Dreigliedstück aufweist. Bevorzugt ist die erfindungsgemäße Reifenkette durch erfindungsgemäße Dreigliedstücke zusammengesetzt, welche über Verbindungsringe miteinander verbunden sind.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten vorteilhaften Ausgestaltung kann sich der wenigstens eine Endabschnitt des Stachels bis zu einem freien Stachelende erstrecken. Dadurch kann bereits bei einem Bodenkontakt, bei dem der Stachel nicht tief in den Boden eindringt, eine gute Traktion gewährleistet sein. Zudem kann die Außenkontur bei der Herstellung des Stachels besonders einfach geformt werden.

Um eine möglichst gute Traktion zu erreichen, kann der Endabschnitt des Stachels wenigstens so hoch wie eine minimale Breite der Außenkontur sein. Die minimale Breite der Außenkontur kann dabei durch die Dicke des Stachels im Bereich der eingebuchteten Außenkontur bestimmt sein.

Der Stachel kann eine sich die gesamte Stachellänge und/oder den Endabschnitt bis zum freien Stachelende durchgängig erstreckende eingebuchtete Außenkontur aufweisen. Ein solcher Stachel bietet gleich mehrere Vorteile. Zum einen kann ein Kettenglied mit einem solchen Stachel eine besonders gute Traktion aufweisen. Zum anderen kann diese Ausgestaltung vorteilhaft sein, wenn der Stachel an das übrige Kettenglied geschweißt ist. Das übrige Kettenglied ohne den Stachel kann durch ein ringförmiges Teil gebildet sein. Das ringförmige Teil kann insbesondere die Form eines Rundstahlkettengliedes haben.

Das ringförmige Teil des Kettengliedes kann wenigstens im Bereich des Stachels eine Schenkelstärke aufweisen, die größer als die minimale Breite der Außenkontur des Stachels ist.

Im Bereich der eingebuchteten Außenkontur liegt der Stachel dadurch dichter an dem übrigen Kettenglied an. An einem Stoßbereich zwischen dem Stachel und dem übrigen Kettenglied ist dann eine große Fläche vorhanden, an der der Stachel mit dem übrigen Kettenglied verschweißt werden kann. Dadurch kann ein besonders stabiles Kettenglied erhalten werden.

Alternativ dazu kann sich die eingebuchtete Außenkontur nicht durchgängig über die gesamte Stachellänge erstrecken. Um die zuvor beschriebenen Vorteile bei der Befestigung zwischen Stachel und übrigen Kettenglied zu erhalten, ist es ausreichend, wenn der Stachel wenigstens im Stoßbereich zum übrigen Kettenglied die eingebuchtete Außenkontur aufweist.

Der wenigstens eine Stachel kann wenigstens zwei Stellen mit eingebuchteter Außenkontur aufweisen. Alternativ dazu kann der Stachel zusätzlich zu der wenigstens einen Stelle mit der eingebuchteten Außenkontur wenigstens eine Stelle mit einer abgeflachten Außenkontur aufweisen. Die Stellen können sich insbesondere diametral gegenüber liegen. So kann das Kettenglied, egal in welcher Richtung es auf einem Reifen montiert ist, eine gute Traktion bieten. Zudem können, wenn sich die Endabschnitte bis zu einem Stoßbereich mit dem übrigen Kettenglied erstrecken, auf wenigstens zwei Seiten des Stachels große Flächen zum Verschweißen des Stachels mit dem Kettenglied ergeben. Der Stachel kann auch vier Stellen aufweisen, von denen sich jeweils zwei diametral gegenüber liegen. Die Außenkontur des Stachels ist dann in etwa kreuzförmig.

Weist der Stachel zwei sich gegenüber liegende Stellen auf, und beträgt eine minimale Breite der Außenkontur höchstens drei Viertel einer maximalen Länge der Außenkontur, so weist der Stachel eine im Wesentlichen taillierte Außenkontur auf.

Die Außenkontur kann eine bikonkave, bikonvexe oder konvex-konkave Form haben. Eine bikonkave Außenkontur ist besonders vorteilhaft und kann zu der oben genannten taillierten Außenkontur führen. Durch eine konvex-konkave Außenkontur kann ein schaufelartiger Stachel erhalten werden. Je nach Einsatzzweck kann diese Form zu einem Kettenglied mit besonders guter Traktion führen.

Die Außenkontur kann wenigstens ein Kreisbogensegment aufweisen. Das wenigstens eine Kreisbogensegment kann konvex und/oder konkav sei. Beispielsweise können zwei Kreisbogensegmente konkav sein und die Einbuchtungen der Außenkontur formen. Diese beiden konkonkaven Kreisbogensegmente liegen sich bevorzugt gegenüber. Die übrigen Außenkontur kann konvexe Kreisbogensegmente aufweisen.

Der Stachel kann beispielsweise aus einem Rundstahl bzw. einem Draht geformt werden. Aus dem Rundstahl, der ursprünglich einen gleichförmigen Kreisradius aufweist, kann durch geeignete Umformungstechniken wie z.B. Schmieden die erfindungsgemäße Außenkontur geformt werden. Insbesondere können Einbuchtungen in der Außenkontur in die ursprünglich runde Form eingedrückt werden, wodurch die ursprünglich runde Außenkontur länglich geformt wird. Dabei können sich zwei konkave Einbuchtungen gegenüber liegen, welche in der Außenkontur durch konvexe Kreisbogensegmente verbunden sind. Dabei können die konkaven Kreisbogensegmente einen größeren Kreisradius aufweisen als der ursprüngliche Rundstahl und die konvexen Kreisbogensegmente einen kleineren oder gleich großen Kreisradius wie der ursprüngliche Rundstahl.

Eine Mittenachse der Außenkontur kann parallel zu einer durch einen ringförmigen Teil des Kettenglieds aufgespannten Ebene verlaufen. Die Mittenachse verläuft bei einem Stachel mit zwei sich diametral gegenüber liegenden Stellen mit eingebuchteter oder abgeflachter Außenkontur mittig zwischen diesen beiden. Bei einem Stachel mit nur einer Stelle auf einer Seite verläuft die Mittenachse parallel zu dessen Einbuchtung. Durch die wenigstens eine Abflachung oder Einbuchtung in der Außenkontur kann der Stachel eine im Wesentlichen längliche Form entlang der Mittenachse aufweisen.

Ein besonders stabiles Kettenglied und eine gute Verbindung zwischen Stachel und dem übrigen Kettenglied im Fall eines angeschweißten Stachels kann dadurch erhalten werden, dass der Stachel mittig auf einem Schenkel des übrigen Kettenglieds angeordnet ist. Insbesondere kann der Stachel mittig auf einem gerade verlaufenden Abschnitt eines Schenkels angebracht sein. Bevorzugt ist eine Stachellängsachse senkrecht zum Schenkel des übrigen Kettengliedes angeordnet. Die Stachellängsachse liegt bevorzugt innerhalb der Ebene des Kettenglieds.

Um ein besonders einfach und preisgünstig herzustellendes Kettenglied zu erhalten, kann der Stachel an das Kettenglied geschweißt sein. Bei einem angeschweißten Stachel kommen die oben beschriebenen Vorteile der eingebuchteten Außenkontur besonders zum Tragen. Insbesondere kann eine minimale Breite der Außenkontur des Stachels kleiner sein als ein Durchmesser des Kettengliedes. Dadurch kann der Stachel an einem schenkelseitigen Ende stumpf geformt sein und trotzdem sicher durch Verschweißen mit dem Schenkel verbunden sein. Bei der Herstellung kann dadurch darauf verzichtet werden, das schenkelseitige Ende des Stachels komplementär zur Rundung des Kettengliedschenkels auszuformen.

Alternativ zum angeschweißten Stachel kann das Kettenglied mit dem Stachel auch monolithisch, beispielsweise als Gussteil oder Schmiedeteil gebildet sein. Die monolithische Ausgestaltung kann die Stabilität des erfindungsgemäßen Kettengliedes erhöhen. Um die Herstellungskosten niedrig zu halten, ist der Stachel jedoch bevorzugt mit dem übrigen Kettenglied verschweißt.

Eine weitere Ausgestaltung eines erfindungsgemäßen Kettengliedes mit wenigstens einem Stachel kann dadurch erhalten werden, dass ein am Kettenglied angebrachter zweischenkliger Bügel vorhanden ist, von dem wenigstens ein Schenkel einen Stachel bildet. Der Bügel ist bevorzugt am Kettenglied angeschweißt. Das erfindungsgemäße Kettenglied besteht dann aus einem ringförmigen Teil, welcher mit dem Bügel verschweißt ist. Der Bügel ist bevorzugt U- oder V-förmig. Laufen die beiden Schenkel zu ihren freien Enden hin auseinander, so kann das Einsetzen des ringförmigen Teils in den Bügel vor dem Verbinden erleichtert sein. Bei einem U-förmigen Bügel kann dies durch eine Spreizung der Schenkel erreicht werden. Bei einem V- oder C-förmigen Bügel laufen die Schenkel bereits durch die Form vorgegeben an ihren freien Enden auseinander. Der ringförmige Teil kann die Form eines Rundstahlkettengliedes haben und ist bevorzugt am Grund des U- oder V-förmigen Bügels angeordnet. Der Kürze halber ist der angeschweißte Teil im Folgenden als U-Bügel bezeichnet. Genauso gut kann der angeschweißte Teil jedoch auch die genannte V-Form, eine C-Form oder eine andere geeignete Form aufweisen. Ein erfindungsgemäßes Kettenglied mit einem angeschweißten U-Bügel kann dann von Vorteil sein, wenn das Kettenglied liegend in einer Reifenkette verwendet wird. Der U-Bügel ist dann bevorzugt so angeschweißt, dass sich wenigstens ein Schenkel des U-Bügels von dem liegenden Kettenglied aus der durch den ringförmigen Teil aufgespannten Ebene senkrecht zu dieser heraus erstreckt.

Alternativ dazu können sich die Schenkel des U-Bügels auch schräg zur Ebene des ringförmigen Teils erstrecken.

Das erfindungsgemäße Dreigliedstück kann dadurch weiter verbessert werden, dass zwei äußere Kettenglieder einen innerhalb der Ebene des Kettengliedes angeordneten Stachel aufweisen und ein mittleres Kettenglied einen zweischenkeligen Bügel aufweisen, von dem wenigstens ein Schenkel einen Stachel bildet. Bevorzugt sind die Stacheln aller drei Kettenglieder so ausgerichtet, dass sie im Wesentlichen parallel verlaufen.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend für einen bestimmten Anwendungsfalls durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine perspektivische Ansicht einer ersten vorteilhaften Ausführungsform eines erfindungsgemäßen Kettenglieds;
- Fig. 2: eine schematische Darstellung der Außenkontur des Stachels aus Fig. 1;
- Fig. 3: eine perspektivische Ansicht eines erfindungsgemäßen Dreigliedstücks mit zwei Kettengliedern der Ausführungsform aus Fig. 1.

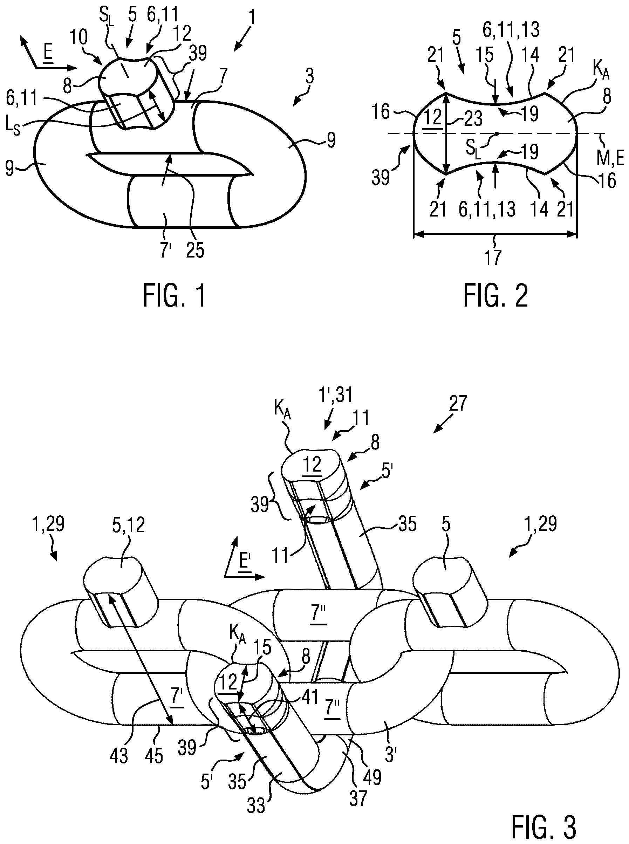

Fig. 1 zeigt eine erste Ausführungsform eines erfindungsgemäßen Kettengliedes 1. Das Kettenglied 1 setzt sich zusammen aus einem ringförmigen Teil 3 und dem Stachel 5.

Das ringförmige Teil 3 ist bevorzugt in Form eines Rundstahlkettengliedes ausgestaltet. Das erfindungsgemäße Kettenglied 1 ist jedoch nicht auf diese Form beschränkt. Das ringförmige Teil 3 kann auch jede andere geeignete Kettengliedform aufweisen. Insbesondere kann das ringförmige Teil 3 auch über einen mittigen Steg verfügen, um die Stabilität des Kettenglieds 1 zu erhöhen.

Das ringförmige Teil 3 besitzt zwei Schenkel 7, 7' und zwei Bögen 9. Die zwei Schenkel 7, 7' sind bevorzugt im Wesentlichen geradlinig und verlaufen parallel zueinander. Die Schenkel 7, 7' und die Bögen 9 spannen zusammen eine Ebene E des ringförmigen Teils 3 auf.

Mittig auf dem Schenkel 7 ist der Stachel 5 angeordnet. Alternativ dazu kann der Stachel auch an einer anderen Position des ringförmigen Teils 3 angeordnet sein. Bevorzugt ist der Stachel 5 jedoch auf dem Schenkel 7 oder im Übergangsbereich zwischen dem Schenkel 7 und den Bögen 9 angeordnet. Der Stachel 5 ist bevorzugt so orientiert, dass eine Stachellängsachse S_{L} senkrecht zum Schenkel 7 verläuft. Die Stachellängsachse S_{L} liegt dabei bevorzugt in der Ebene E, die durch das ringförmige Teil 3 aufgespannt wird. Der Stachel 5 ist bevorzugt mit dem Schenkel 7 verschweißt. Alternativ dazu können Stachel 5 und ringförmiges Teil 3 auch monolithisch, beispielsweise als Guss- oder Schmiedeteil gebildet sein.

Der Stachel 5 weist an seinem dem Schenkel 7 abgewandten Ende 10, welches das freie Stachelende 8 darstellt, eine bevorzugt gerade und senkrecht zur Stachellängsachse S_{L} verlaufende Endfläche 12 auf. Eine Aufsicht auf die Endfläche 12 mit Blickachse entlang der Stachellängsachse S_{L} ist in Fig. 2 gezeigt.

Im Folgenden ist der Stachel 5 mit Bezug auf die Fig. 1 und 2 näher beschrieben.

Fig. 2 zeigt die Außenkontur K_{A} des Stachels 5 in seinem Endabschnitt 39. Der Stachel 5 weist zwei sich diametral gegenüber liegende Stellen 6 auf, in denen die Außenkontur K_{A} des Stachels 5 eingebuchtet ist. Die Außenkontor K_{A} weist an den Stellen 6 also die Einbuchtungen 13 auf. Die beiden Stellen 6 bilden Traktionsbereiche 11 des Stachels 5. Zwischen den beiden Traktionsbereichen 11 verläuft die Mittenachse M der Außenkontur K_{A}. Die Mittenachse M verläuft bevorzugt parallel zur Ebene E. Die Außenkontur K_{A} verläuft bevorzugt länglich parallel zur Mittenachse M. Die eingebuchtete Außenkontur K_{A} erstreckt sich über die ganze Stachellänge L_{S} bis zum freien Stachelende 8. Die Stellen 6 erstrecken sich bei dieser Ausführungsform über die ganze Stachellänge L_{S}. Der Stachel 5 weist also die Außenkontur K_{A} des Endabschnitts 39 über die gesamte Stachellänge L_{S} auf.

Die Einbuchtungen 13 haben bevorzugt die Form eines Kreisbogens. Die Einbuchtungen 13 bilden die konkaven Kreisbogensegmente 14 in der Außenkontur K_{A}. Die konkaven Kreisbogensegmente 14 sind in der Außenkontur K_{A} verbunden über die konvexen Kreisbogensegmente 16. Bevorzugt ist ein Kreisradius (nicht gezeigt) der konkaven Kreisbogensegmente 14 größer als ein Kreisbogenradius (nicht gezeigt) der konvexen Kreisbogensegmente 16. Die Außenkontur K_{A} hätte ohne die Einbuchtungen 13 eine im Wesentlichen ovale oder kreisrunde Form. Lediglich beispielhaft ist in Fig. 2 eine Außenkontur K_{A} dargestellt, welche ohne die Einbuchtungen 13 eine ovale Form hätte. Eine kreisrunde Form der Außenkontur K_{A} ohne Einbuchtungen 13 ist gleichwertig zur dargestellten ovalen Form.

Durch die Einbuchtungen 13 weist die Außenkontur K_{A} eine bikonkave Form auf. Diese Form ist besonders vorteilhaft, da die resultierenden Traktionsbereiche 11 zu beiden Seiten der Ebene E gleich aufgebaut und daher gleich wirksam sind.

Die minimale Breite 15 der Außenkontur K_{A} ist kleiner als drei Viertel der maximalen Länge 17. Die minimale Breite 15 weist die Außenkontur K_{A} in dem Bereich auf, in dem sich Zentren 19 der Einbuchtungen 13 gegenüber liegen. Die maximale Länge 17 entspricht der Länge der Außenkontur K_{A} entlang der Mittenachse M.

Durch die Einbuchtungen 13 entstehen die vorspringenden Bereiche 21. Durch die vorspringenden Bereiche 21 und die Einbuchtungen 13 weist die Außenkontur K_{A} eine Profilierung parallel zur Ebene E auf. Die so erhaltene Profilierung kann zur Verbesserung der Traktion des Kettengliedes beitragen. An den vorspringenden Bereichen 21 kann die Außenkontur von der Kreisbogenform abweichen. Insbesondere können die vorspringenden Bereiche 21 Übergangsbereiche für die konkaven Kreisbogensegmente 14 zu den konvexen Kreisbogensegmenten 16 und umgekehrt darstellen.

Die Dicke 23 der Außenkontur K_{A}, welche zwischen zwei sich senkrecht zur Mittenachse M gegenüber liegenden vorspringenden Bereichen 21 gemessen ist, ist bevorzugt maximal so groß wie eine Schenkelstärke 25 des Schenkels 7. Die minimale Breite 15, die durch die Einbuchtungen 13 kleiner als die Dicke 23 und daher kleiner als die Schenkelstärke 25 ist, kann ein Anschweißen des Stachels 5 an den Schenkel 7 wesentlich erleichtern. Weist der Stachel 5 alternativ zu einer der Einbuchtungen 13 wenigstens eine Abflachung (nicht gezeigt) auf, so kann die minimale Breite 15 gleich der Dicke 23 sein. Die Dicke 23 ist dann bevorzugt kleiner als die Schenkelstärke 25, um die Vorteile für ein erleichtertes Anschweißen nutzen zu können. Der Stachel 5 der mit Bezug auf die Fig. 1 und 2 beschriebenen Ausführungsform weist eine Stachellänge Ls auf, die größer als die minimale Breite 15 ist. Eine Stachellänge Ls, die wenigstens der minimalen Breite 15 entspricht, kann vorteilhaft sein, um großflächige Traktionsbereiche 11 zu formen. Des Weiteren kann ein Stachel 5 mit hoher Stachellänge Ls eine große Verschleißmasse darstellen. Der Stachel 5 weist über die gesamte Stachellänge Ls eine eingebuchtete Außenkontur K_{A} auf. Dies ist besonders vorteilhaft, um sowohl großflächige Traktionsbereiche 11 bereit zu stellen, als auch eine Schweißverbindung zwischen Stachel 5 und dem ringförmigen Teil 3 zu verbessern.

Fig. 3 zeigt ein erfindungsgemäßes Dreigliedstück 27. Das Dreigliedstück weist zwei erfindungsgemäße Kettenglieder 1 auf, welche denen der mit Bezug auf die Fig. 1 und 2 beschriebenen Ausführungsform entsprechen. Die beiden Kettenglieder 1 stellen die äußeren Kettenglieder 29 des Dreigliedstücks 27 dar. Die beiden Kettenglieder 1 sind über ein Kettenglied 1',
welches eine zweite Ausführungsform eines erfindungsgemäßen Kettengliedes darstellt, verbunden. Das Kettenglied 1' stellt daher ein mittleres Kettenglied 31 des Dreigliedstücks 27 dar.

Das Kettenglied 1' weist ein ringförmiges Teil 3' auf, welches bevorzugt die Form eines Rundstahlkettengliedes aufweist bzw. durch ein solches gebildet ist. Das Kettenglied 1' weist zudem einen zweischenkligen Bügel 33 auf, welcher an das ringförmige Teil 3' angeschweißt ist. Der Bügel 33 weist zwei Schenkel 35 und einen die Schenkel 35 verbindenden Grund 37 auf. Lediglich beispielhaft ist der Bügel 33 U-förmig dargestellt. Er kann ebensogut V-förmig oder C-förmig sein oder eine andere geeignete Form aufweisen. Bevorzugt ist das ringförmige Teil 3' am Grund 37 zwischen den Schenkeln 35 liegend angeordnet, wobei die Schenkel 35 senkrecht oder schräg zur durch das ringförmige Teil 3' aufgespannten Ebene E' angeordnet sind. Alternativ dazu kann auch nur einer der Schenkel 35 schräg zur Ebene E' angeordnet sein.

Das ringförmige 3' ist bevorzugt mit seinen Schenkeln 7" an den U-Bügel 33 angeschweißt.

Die Schenkel 35 der Bügel stellen zugleich Stacheln 5' des Kettenglieds 1' dar. Die Stacheln 5' weisen Endabschnitte 39 auf, in denen die Außenkontur K_{A} eingebuchtet ist. Die Endabschnitte 39 erstrecken sich bis zu den freien Stachelenden 8. Über die Endabschnitte 39 erstrecken sich also die Traktionsbereiche 11 der Stachel 5'. Die Traktionsbereiche 11 entsprechen im Wesentlichen denen des mit Bezug auf die Fig. 1 und 2 beschriebenen Stachels 5. An dieser Stelle ist daher nur auf die Unterschiede zu den mit Bezug auf die Fig. 1 und 2 beschriebenen Traktionsbereiche eingegangen.

Die Endabschnitte 39 der Stachel 5' sind höher als die minimale Breite der Außenkonturen K_{A}. D. h. die Endabschnittshöhen 41 sind größer als die minimalen Breiten 15.

Die identische Ausgestaltung der Traktionsbereiche 11 der Stacheln 5' des Bügels 33 und der Stacheln 5 der zwei Kettenglieder 1 ist nicht zwingend. Das Dreigliedstück 27 kann auch Stacheln 5 und 5' aufweisen, welche unterschiedlich geformt sind. Dabei können alle erfindungsgemäßen Ausgestaltungen beliebig miteinander kombiniert werden.

Im Dreigliedstück 27 verläuft die Ebene E' des Kettenglieds 1' senkrecht zu den Ebenen E der Kettenglieder 1. In einem montierten Zustand als Teil einer Reifenkette (nicht gezeigt) sind die Kettenglieder 1 bevorzugt stehend angeordnet, so dass deren Stachel 5 senkrecht zu einer Reifenkettenebene bzw. senkrecht zu einer Lauffläche eines Reifens angeordnet sind. Das ringförmige Teil 3' des Kettenglieds 1', welches zwischen den beiden Kettengliedern 1 angeordnet ist, ist bevorzugt liegend angeordnet, so dass die durch das ringförmige Teil 3' aufgespannte Ebene E' parallel zu einer Reifenlauffläche ausgerichtet ist. Dann strecken sich die Schenkel 35 aus einer Ebene der Reifenkette bzw. einer Lauffläche des Reifens heraus.

Bevorzugt verlaufen die Stachel 5 und 5' parallel zueinander. Um eine gleichmäßige Belastung der Kettenglieder 1 und 1' sowie der Stachel 5 und 5' bei der Verwendung des erfindungsgemäßen Dreigliedstücks in einer Reifenkette zu erreichen, weisen die stehenden Kettenglieder 1 eine im Wesentliche gleiche Gesamthöhe wie der Bügel 33 auf. Die Gesamthöhe 43 der Kettenglieder 1 ist dabei von der Endfläche 12 bis zu einer der Endfläche 12 abgewandten Seite 45 des Schenkels 7' gemessen. Die Gesamthöhe 47 des Bügels 33 ist von den Endflächen 12 der Stacheln 5' bis zur Außenseite 49 des den Grund 37 bildenden Abschnitts des Bügels 33 gemessen.

### Bezugszeichen

- 1,1': Kettenglied
- 3,3': ringförmiges Teil
- 5,5': Stachel
- 6: Stelle
- 7, 7', 7": Schenkel
- 8: freies Stachelende
- 9: Bögen
- 10: vom Schenkel abgewandtes Ende
- 11: Traktionsbereich
- 12: Endfläche
- 13: Einbuchtungen
- 14: konkaves Kreisbogensegment
- 15: minimale Breite
- 16: konvexes Kreisbogensegment
- 17: maximale Länge
- 19: Zentren der Einbuchtungen
- 21: vorspringende Bereiche
- 23: Dicke
- 25: Schenkelstärke
- 27: Dreigliedstück
- 29: äußere Kettenglieder
- 31: mittleres Kettenglied
- 33: Bügel
- 35: Schenkel
- 37: Grund
- 39: Endabschnitt
- 41: Endabschnittshöhen
- 43: Gesamthöhe des Kettenglieds
- 45: der Endfläche abgewandten Seite
- 47: Gesamthöhe des Bügels
- 49: Außenseite

- E, E': Ebene
- L_{S}: Stachellänge
- M: Mittenachse
- K_{A}: Außenkontur
- S_{L}: Stachellängsachse

## Patentansprüche

1. Kettenglied (1, 1') für Reifen- und/oder Gleitschutzketten, mit wenigstens einem vorspringenden Stachel (5, 5'), wobei der Stachel (5, 5') an wenigstens einem Endabschnitt (39) eine an wenigstens einer Stelle (6) eingebuchtete Außenkontur (K_{A}) aufweist, **dadurch gekennzeichnet, dass** eine minimale Breite (15) der Außenkontur (K_{A}) höchstens drei Viertel einer maximalen Länge (17) der Außenkontur (K_{A}) beträgt..

2. Kettenglied (1, 1') nach Anspruch 1, **dadurch gekennzeichnet, dass** der wenigstens eine Stachel (5, 5') an zwei Stellen (6) eine eingebuchtete Außenkontur (K_{A}) aufweist.

3. Kettenglied (1, 1') nach Anspruch 2, **dadurch gekennzeichnet, dass** sich die zwei Stellen (6) diametral gegenüber liegen.

4. Kettenglied (1, 1') nach einem der Ansprüche 1 bis 3, **dadurch gekennzeichnet, dass** die Außenkontur (K_{A}) eine bikonkave, bikonvexe oder konkav-konvexe Form hat.

5. Kettenglied (1, 1') nach einem der Ansprüche 1 bis 4, **dadurch gekennzeichnet, dass** die Außenkontur (K_{A}) wenigstens ein Kreisbogensegment (14, 16) aufweist.

6. Kettenglied (1, 1') nach Anspruch 5, **dadurch gekennzeichnet, dass** das wenigstens eine Kreisbogensegment (14, 16) konvex und/oder konkav ist.

7. Kettenglied (1, 1') nach einem der Ansprüche 1 bis 6, **dadurch gekennzeichnet, dass** der Stachel (5, 5') auf einem ringförmigen Teil (3, 3') des Kettenglieds (1, 1') angeordnet ist.

8. Kettenglied (1, 1') nach Anspruch 7, **dadurch gekennzeichnet, dass** das ringförmige Teil (3, 3') des Kettenglieds (1, 1') wenigstens im Bereich des Stachels (5, 5') eine Schenkelstärke (25) aufweist, die größer als die minimale Breite (15) der Außenkontur (K_{A}) des Stachels (5, 5') ist.

9. Kettenglied (1, 1') nach Anspruch 7 oder 8, **dadurch gekennzeichnet, dass** der Stachel (5, 5') auf einem geraden Schenkel (7, 7', 7") des ringförmigen Teils (3, 3') angeordnet ist und sich eine Stachellängsachse (S_{L}) senkrecht zum Schenkel (7, 7', 7") erstreckt.

10. Kettenglied (1, 1') nach einem der Ansprüche 1 bis 6, **dadurch gekennzeichnet, dass** ein am Kettenglied (1, 1') angebrachter zweischenkliger Bügel (33) vorhanden ist, von dem wenigstens ein Schenkel (35) einen Stachel (5') bildet.

11. Kettenglied (1, 1') nach Anspruch 10, **dadurch gekennzeichnet, dass** der Bügel (33) U- oder V-förmig ist.

12. Dreigliedstück (27) für Reifen- und/oder Gleitschutzketten, mit drei Kettengliedern (1, 1'), **dadurch gekennzeichnet, dass** mindestens zwei Kettenglieder (1, 1') nach wenigstens einem der Ansprüche 1 bis 11 gebildet sind.

13. Dreigliedstück (27) nach Anspruch 12, **dadurch gekennzeichnet, dass** zwei äußere Kettenglieder (1) nach einem der Ansprüche 1 bis 9 und ein mittleres Kettenglied (1') nach Anspruch 10 oder 11 gebildet sind.

14. Reifenkette, insbesondere Reifen- und/oder Gleitschutzketten für Forstfahrzeuge, **dadurch gekennzeichnet, dass** die Reifenkette mindestens zwei Kettenglieder (1, 1') nach wenigstens einem der Ansprüche 1 bis 11 und/oder mindestens ein Dreigliedstück (27) nach Anspruch 12 oder 13 aufweist.

## Claims

1. Chain link (1, 1') for tyre protection chains and/or anti-skid chains, comprising at least one protruding prong (5, 5'), the prong (5, 5') having, on at least one end portion (39), an outer contour (K_{A}) indented at at least one point, **characterised in that** a minimum width (15) of the outer contour (K_{A}) is at most three quarters of a maximum length (17) of the outer contour (K_{A}).

2. Chain link (1, 1') according to claim 1, **characterised in that** the at least one prong (5, 5') has an outer contour (K_{A}) indented at two points (6).

3. Chain link (1, 1') according to claim 2, **characterised in that** the two points (6) diametrically oppose each other.

4. Chain link (1, 1') according to any of claims 1 to 3, **characterised in that** the outer contour (K_{A}) has a biconcave, biconvex or concave-convex shape.

5. Chain link (1, 1') according to any of claims 1 to 4, **characterised in that** the outer contour (K_{A}) has at least one circular arc segment (14, 16).

6. Chain link (1, 1') according to claim 5, **characterised in that** the at least one circular arc segment (14, 16) is convex and/or concave.

7. Chain link (1, 1') according to any of claims 1 to 6, **characterised in that** the prong (5, 5') is arranged on an annular part (3, 3') of the chain link (1, 1').

8. Chain link (1, 1') according to claim 7, **characterised in that** the annular part (3, 3') of the chain link (1, 1') has, at least in the region of the prong (5, 5'), a limb thickness (25) which is greater than the minimum width (15) of the outer contour (K_{A}) of the prong (5, 5').

9. Chain link (1, 1') according to either claim 7 or claim 8, **characterised in that** the prong (5, 5') is arranged on a straight limb (7, 7', 7") of the annular part (3, 3') and a prong longitudinal axis (S_{L}) extends perpendicularly to the limb (7, 7', 7").

10. Chain link (1, 1') according to any of claims 1 to 6, **characterised in that** a two-limbed bracket (33) fitted onto the chain link (1, 1') is provided, from which bracket at least one limb (35) forms a prong (5').

11. Chain link (1, 1') according to claim 10, **characterised in that** the bracket (33) is U-shaped or V-shaped.

12. Three-link piece (27) for tyre protection chains and/or anti-skid chains, comprising three chain links (1, 1'), **characterised in that** at least two chain links (1, 1') are formed according to at least one of claims 1 to 11.

13. Three-link piece (27) according to claim 12, **characterised in that** two outer chain links (1) are formed according to any of claims 1 to 9, and a central chain link (1') is formed according to either claim 10 or claim 11.

14. Tyre chain, in particular tyre protection chains and/or anti-skid chains for forestry vehicles, **characterised in that** the tyre chain has at least two chain links (1, 1') according to at least one of claims 1 to 11 and/or at least one three-link piece (27) according to either claim 12 or claim 13.

## Revendications

1. Maillon de chaine (1, 1') pour des chaines à action antidérapante ou de protection de pneumatiques, comprenant au moins un ergot (5, 5') en saillie, l'ergot (5, 5') présentant au niveau d'au moins une zone d'extrémité (39), un contour extérieur (K_{A}) incurvé en creux en au moins un endroit (6), **caractérisé en ce qu'**une largeur minimale (15) du contour extérieur (K_{A}) vaut tout au plus trois quart d'une longueur maximale (17) du contour extérieur (K_{A}).

2. Maillon de chaine (1, 1') selon la revendication 1, **caractérisé en ce que** ledit au moins un ergot (5, 5') présente un contour extérieur (K_{A}) incurvé en creux en deux endroits (6).

3. Maillon de chaine (1, 1') selon la revendication 2, **caractérisé en ce que** lesdits deux endroits (6) sont diamétralement opposés.

4. Maillon de chaine (1, 1') selon l'une des revendications 1 à 3, **caractérisé en ce que** le contour extérieur (K_{A}) a une forme biconcave, biconvexe ou une forme concavo-convexe.

5. Maillon de chaine (1, 1') selon l'une des revendications 1 à 4, **caractérisé en ce que** le contour extérieur (K_{A}) présente au moins un segment d'arc de cercle (14, 16).

6. Maillon de chaine (1, 1') selon la revendication 5, **caractérisé en ce que** ledit au moins un segment d'arc de cercle (14, 16) est convexe et/ou concave.

7. Maillon de chaine (1, 1') selon l'une des revendications 1 à 6, **caractérisé en ce que** l'ergot (5, 5') est agencé sur une partie annulaire (3, 3') du maillon de chaine (1, 1').

8. Maillon de chaine (1, 1') selon la revendication 7, **caractérisé en ce que** la partie annulaire (3, 3') du maillon de chaine (1, 1') présente, au moins dans la zone de l'ergot (5, 5'), une épaisseur de branche (25), qui est plus grande que la largeur minimale (15) du contour extérieur (K_{A}) de l'ergot (5, 5').

9. Maillon de chaine (1, 1') selon la revendication 7 ou la revendication 8, **caractérisé en ce que** l'ergot (5, 5') est agencé sur une branche rectiligne (7, 7', 7") de la partie annulaire (3, 3'), et un axe longitudinal d'ergot (S_{L}) s'étend perpendiculairement à ladite branche (7, 7', 7").

10. Maillon de chaine (1, 1') selon l'une des revendications 1 à 6, **caractérisé en ce qu'**il est prévu un étrier (33) à deux branches, placé sur le maillon de chaine (1, 1') et dont au moins une branche (35) forme un ergot (5').

11. Maillon de chaine (1, 1') selon la revendication 10, **caractérisé en ce que** l'étrier (33) est réalisé en forme de U ou de V.

12. Pièce à trois maillons (27) pour chaines à action antidérapante ou de protection de pneumatiques, comprenant trois maillons de chaine (1, 1'), **caractérisée en ce qu'**au moins deux maillons de chaine (1, 1') sont réalisés selon l'une au moins des revendications 1 à 11.

13. Pièce à trois maillons (27) selon la revendication (12), **caractérisée en ce que** deux maillons de chaine extérieurs (1) sont réalisés selon l'une des revendications 1 à 9, et un maillon de chaine central (1') est réalisé selon la revendication 10 ou la revendication 11.

14. Chaine à pneumatique, notamment chaine à action antidérapante ou de protection de pneumatiques pour véhicules forestiers, **caractérisée en ce que** la chaine à pneumatique comprend au moins deux maillons de chaine (1, 1') selon l'une au moins des revendications 1 à 11, et/ou au moins une pièce à trois maillons (27) selon la revendication 12 ou la revendication 13.
